# FASCICULE DE BREVET EUROPEEN

(11) **EP 4 223 956 B1**
(45) Date de publication et mention de la délivrance du brevet: **12.06.2024**
(21) Numéro de dépôt: 23155189.6
(22) Date de dépôt: 06.02.2023
(51) Int. Cl.: E04B 2/86, A01G 9/02

(54) **MUR À COFFRAGE INTÉGRÉ VÉGÉTALISÉ**
MAUER MIT INTEGRIERTER BEGRÜNUNGSSCHALUNG
VEGETATED INTEGRATED FORMWORK WALL

(30) Priorité: 07.02.2022 FR 2201043
(43) Date de publication de la demande: 09.08.2023
(73) Titulaire: IDSB Ingenierie, 67720 Hoerdt (FR)
(72) Inventeur: HELMSTETTER, Didier, 67170 Olwisheim (FR); DUBOIS, Frédéric, 69720 Saint Laurent de Mure (FR)
(74) Mandataire: Cabinet Bleger-Rhein-Poupon

(56) Documents cités:
- EP-A1- 2 618 648
- EP-A2- 1 690 993
- EP-B1- 2 618 648
- WO-A1-2016/142283
- CN-A- 109 629 707

## Description

L'invention concerne un mur à coffrage intégré végétalisé.

Cette invention concerne le domaine du bâtiment et, plus particulièrement, celui de la fabrication, en usine, de murs à coffrage intégré destinés à être implantés sur un chantier pour la réalisation d'un immeuble, d'un ouvrage décoratif ou d'un ouvrage de lutte contre le bruit et/ou la pollution.

On connait, d'ores et déjà, des murs à coffrage intégré qui sont employés pour la construction d'immeubles, notamment dans le milieu urbain ou périurbain.

Le document CN 109 629 707 A divulgue les caractéristiques du préambule de la revendication 1.

Un tel mur à coffrage intégré comporte au moins, d'une part, une première peau orientée en direction de l'extérieur d'un immeuble et usuellement réalisée en béton, d'autre part, une seconde peau orientée en direction de l'intérieur de l'immeuble et réalisée en béton et, d'autre part encore, des moyens de raccordement de ces deux peaux.

On observera qu'un tel mur à coffrage intégré est fabriqué en usine, ceci à partir de ciment. La fabrication de ce ciment, d'une part, nécessite l'apport d'une quantité d'énergie (notamment fossile) importante et, d'autre part, génère l'émission d'une quantité importante de CO2. De plus, en usine, le séchage du béton des peaux d'un tel mur à coffrage intégré nécessite, là encore, l'apport d'une quantité importante d'énergie.

Une fois implanté sur site, un tel mur à coffrage intégré, plus particulièrement sa première peau en béton, contribue à la création d'un environnement urbain très minéralisé qui a pour effet de définir des îlots de chaleur urbain. Ces îlots de chaleur, d'une part et en journée, accumulent la chaleur et créent un environnement surchauffé par rapport à la température environnante et, d'autre part et la nuit, restituent cette chaleur accumulée en maintenant une température élevée. La présence de ces îlots de chaleur nuit au confort des riverains et perturbe le repos nocturne de ses habitants.

La présente invention se veut de remédier aux inconvénients des murs à coffrage intégré de l'état de la technique.

Cette invention a, également, pour objectif de trouver une solution pour limiter les îlots de chaleur, pour réduire la température de ces îlots de chaleur, et pour climatiser les espaces urbains ou périurbains, ceci de manière naturelle.

Un autre objectif de cette invention est de lutter contre la pollution de l'air du milieu urbain, notamment en réduisant le taux de de CO2.

Finalement, l'invention se veut de réduire l'impact écologique de la fabrication des murs à coffrage intégré en usine, notamment en matière d'émission de CO2.

A cet effet, l'invention concerne un mur à coffrage intégré végétalisé ayant les caractéristiques de la revendication 1.

Selon une autre caractéristique, le mur à coffrage intégré comporte au moins un élément intermédiaire, qui est interposé entre la première peau et la seconde peau, qui est parallèle à la première peau ainsi qu'à la seconde peau, et qui est positionné à une distance déterminée de la première peau en sorte de définir une première partie dudit volume interne qui comporte intérieurement le substrat de culture.

Une caractéristique additionnelle concerne le fait que ledit au moins un élément intermédiaire comporte au moins une plaque isolante thermique et/ou au moins un moyen d'étanchéité ou de drainage, notamment positionné entre ladite plaque isolante thermique et la première peau, voire rapporté sur ladite au moins une plaque isolante thermique.

Selon une autre caractéristique, la seconde peau comporte au moins une ouverture traversante secondaire tandis que le mur à coffrage intégré végétalisé comporte au moins un moyen de maintien secondaire, qui complète ladite au moins une ouverture traversante secondaire, et qui est configuré pour maintenir le substrat de culture à l'intérieur de ladite au moins une partie dudit volume interne.

Une autre caractéristique concerne le fait que ledit au moins un moyen de maintien primaire, respectivement ledit au moins un moyen de maintien secondaire, comporte au moins un élément ajouré qui s'étend à l'intérieur de ladite au moins ouverture traversante primaire, respectivement à l'intérieur de ladite au moins ouverture traversante secondaire, et/ou au travers de ladite au moins une ouverture traversante primaire, respectivement au travers de ladite au moins une ouverture traversante secondaire.

Encore une autre caractéristique concerne le fait que le mur comporte des moyens de solidarisation qui sont configurés pour solidariser ledit au moins un moyen de maintien primaire et ladite première peau, respectivement ledit au moins un moyen de maintien secondaire et ladite seconde peau.

De manière alternative, le mur comporte des moyens de montage qui sont configurés pour monter ledit au moins un bac sur la première peau, respectivement sur la seconde peau.

De tels moyens de montage sont, plus particulièrement, configurés pour monter ledit au moins un bac de manière mobile par rapport à la première peau, respectivement par rapport à la seconde peau, ceci entre une position rabattue et une position déployée par rapport à cette première peau, respectivement par rapport à cette seconde peau. De manière alternative, de tels moyens de montage peuvent être configurés pour monter ledit au moins un bac de manière amovible par rapport à la première peau

L'invention concerne, encore, un procédé de fabrication d'un tel mur à coffrage intégré selon chacune des revendications 11 à 14.

Ainsi, le mur à coffrage intégré végétalisé conforme à l'invention comporte, d'une part et au moins à l'intérieur d'au moins une partie du volume interne, un substrat de culture et, d'autre part, au moins un moyen de maintien primaire (respectivement au moins un moyen de maintien secondaire) de ce substrat de culture au moins à l'intérieur de ladite au moins une partie de ce volume interne. Un tel moyen de maintien primaire (respectivement secondaire) permet, avantageusement, d'empêcher que du substrat de culture (qui est contenu à l'intérieur d'au moins une partie du volume interne du mur) s'échappe hors du mur (plus particulièrement hors du volume interne de ce mur) et au travers de ladite ouverture traversante primaire (respectivement au travers ladite ouverture traversante secondaire) de ce mur. Un tel moyen de maintien primaire (respectivement secondaire) permet, également, à de la végétation, semée ou plantée dans ledit substrat de culture, de s'étendre à l'extérieur du mur et l'avant de la première peau (respectivement à l'avant de la seconde peau) de ce mur, soit au travers d'un tel moyen de maintien primaire (respectivement secondaire), plus particulièrement lorsque celui-ci adopte la forme d'un élément ajouré, soit à l'intérieur d'un tel moyen de maintien primaire (respectivement secondaire), sachant que celui-ci adopte la forme d'un bac.

Le mur à coffrage intégré végétalisé comporte, également, des moyens de montage dudit au moins un bac sur la première peau (respectivement sur la seconde peau), ceci de manière mobile par rapport à cette première peau (respectivement par rapport à cette seconde peau), entre une position rabattue par rapport à cette première peau (respectivement par rapport à cette seconde peau) et une position déployée par rapport à cette première peau (respectivement par rapport à cette seconde peau). Cette caractéristique permet, avantageusement et en position rabattue d'un tel bac, à un tel bac de constituer un élément de coffrage configuré pour définir une ouverture traversante primaire de la première peau (respectivement pour définir une ouverture traversante secondaire de la seconde peau), ceci dans le cadre d'un processus de fabrication du mur à coffrage intégré.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

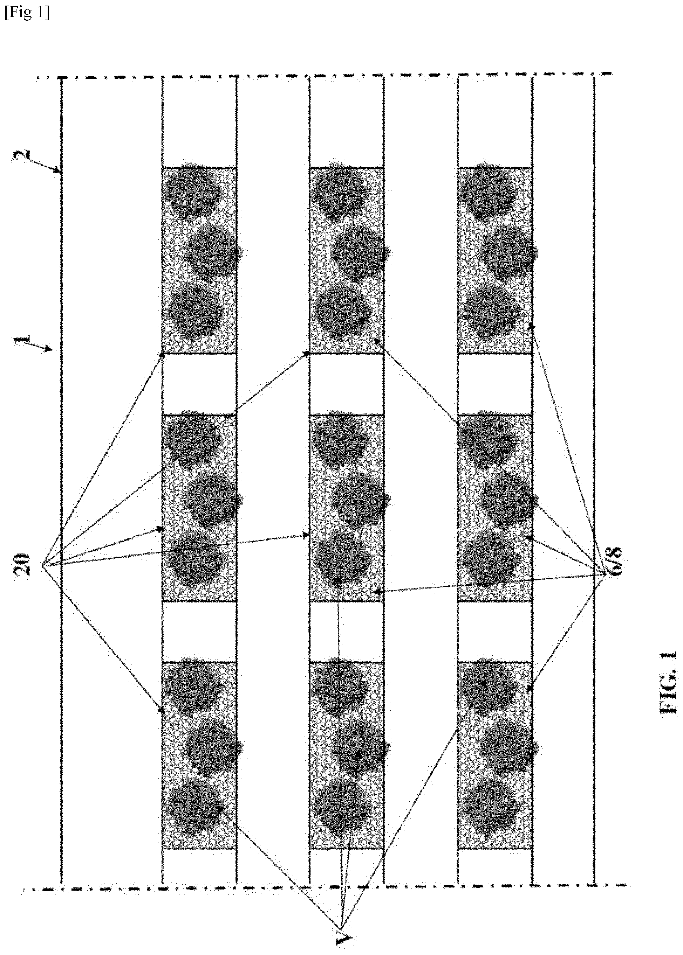

[Fig 1] est une vue schématisée et de face d'un mur à coffrage intégré végétalisé conforme à l'invention.
[Fig 2] est une vue schématisée, en coupe et de côté du mur à coffrage intégré végétalisé qui est illustré figure 1 et qui comporte au moins un moyen de maintien primaire conforme à un premier mode de réalisation.
[Fig 3] est une vue schématisée, en coupe et de côté du mur à coffrage intégré végétalisé qui est illustré figure 1 et qui comporte au moins un moyen de maintien primaire conforme à une première variante d'un deuxième mode de réalisation.
[Fig 4] est une vue schématisée et en perspective d'un moyen de maintien primaire, qui est conforme à la première variante du deuxième mode de réalisation, et qui est illustré figure 3.
[Fig 5] est une vue schématisée, partielle, en coupe et de côté du mur à coffrage intégré végétalisé qui est illustré figure 3 et qui comporte au moins un moyen de maintien primaire conforme à la première variante du deuxième mode de réalisation, ceci en position rabattue.
[Fig 6] est une vue schématisée, partielle, en coupe et de côté du mur à coffrage intégré végétalisé qui est illustré figure 3 et qui comporte au moins un moyen de maintien primaire conforme à la première variante du deuxième mode de réalisation, ceci en position déployée.
[Fig 7] est une vue schématisée et en perspective d'un moyen de maintien primaire qui est conforme à une deuxième variante du deuxième mode de réalisation.
[Fig 8] est une vue schématisée, partielle, en coupe et de côté du mur à coffrage intégré végétalisé qui comporte au moins un moyen de maintien primaire conforme à la deuxième variante du deuxième mode de réalisation illustrée figure 7.

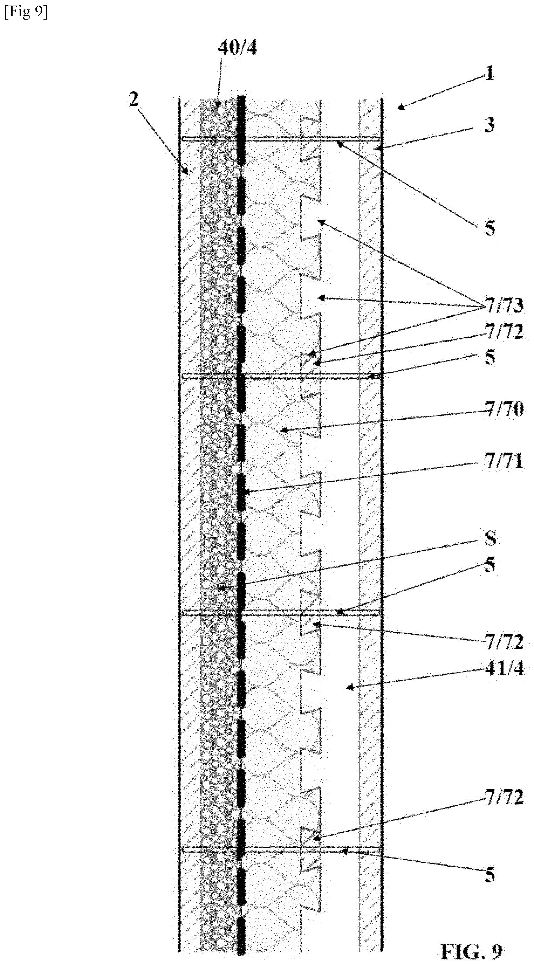

[Fig 9] est une vue schématisée et de dessus du mur à coffrage intégré végétalisé qui est illustré figure 1.

La présente invention concerne le domaine du bâtiment et, plus particulièrement, celui de la fabrication, en usine, de murs à coffrage intégré destinés à être implantés sur un chantier pour la réalisation d'un immeuble, d'un ouvrage décoratif ou d'un ouvrage de lutte contre le bruit et/ou la pollution.

L'invention concerne, alors, plus particulièrement un mur à coffrage intégré végétalisé 1 qui, dans la suite de la description et pour des raisons de concision, sera dénommé « mur 1 ».

Un tel mur 1 est, plus particulièrement, de type préfabriqué dans le sens où ce mur 1 est au moins en partie fabriqué en usine, ceci avant d'être acheminé et implanté sur un chantier pour la réalisation d'un immeuble, d'un ouvrage décoratif ou d'un ouvrage de lutte contre le bruit et/ou la pollution.

Un tel mur 1 comporte une première peau 2, qui est destinée à être orientée dans une première direction, qui s'étend selon un premier plan, et qui est réalisée en un matériau hydraulique, plus particulièrement du béton.

Cette première peau 2 comporte au moins une ouverture traversante primaire 20, voire (et de préférence) une pluralité d'ouvertures traversantes primaires 20. Une telle ouverture traversante primaire 20 est délimitée par une bordure inférieure 21, par une bordure supérieure 22 et par des bordures latérales que comporte la première peau 2.

En fait, cette première peau 2 comporte (voire est constituée par) au moins une plaque plane, qui s'étend selon un plan (qui est au moins parallèle au premier plan selon lequel s'étend la première peau 2, voire confondu avec ce premier plan), et qui est réalisée en un matériau hydraulique, plus particulièrement du béton. Ladite au moins une plaque plane comporte ladite au moins une ouverture traversante primaire 20 qui traverse ladite au moins une plaque plane.

Un tel mur 1 comporte, également, une seconde peau 3, qui est destinée à être orientée dans une seconde direction opposée à la première direction, qui est parallèle à la première peau 2, qui s'étend selon un second plan (qui est parallèle au premier plan), et qui est positionnée à une distance déterminée de la première peau 2 en sorte de définir un volume interne 4. Cette seconde peau 3 est réalisée en un matériau hydraulique, plus particulièrement du béton.

En fait, cette seconde peau 3 comporte (voire est constituée par) au moins une plaque plane, qui s'étend selon un plan (qui est au moins parallèle au second plan selon lequel s'étend la seconde peau 3, voire confondu avec ce second plan), et qui est réalisée en un matériau hydraulique, plus particulièrement du béton.

Ledit mur 1 comporte, aussi, des moyens de raccordement 5 qui sont configurés pour raccorder la première peau 2 et la seconde peau 3. De tels moyens de raccordement 5 comportent, d'une part, une première extrémité qui est noyée à l'intérieur de la première peau 2, d'autre part, une seconde extrémité qui est noyée à l'intérieur de la seconde peau 3 et, d'autre part encore, une partie intermédiaire, qui s'étend entre la première extrémité et la seconde extrémité. De tels moyens de raccordement 5 peuvent adopter la forme de tiges ou de barres et/ou être réalisés en un matériau métallique, polymère, synthétique ou composite (notamment en fibre de verre).

Selon l'invention, ce mur 1 comporte, d'une part et au moins à l'intérieur d'au moins une partie dudit volume interne 4, un substrat de culture S et, d'autre part, au moins un moyen de maintien primaire 6, qui complète ladite au moins une ouverture traversante primaire 20, et qui est configuré pour maintenir le substrat de culture S au moins à l'intérieur de ladite au moins une partie dudit volume interne 4.

Un tel moyen de maintien primaire 6 permet, alors, avantageusement, d'empêcher ce substrat de culture S de s'échapper hors du mur 1 (plus particulièrement hors du volume interne 4 de ce mur 1), ceci au travers de ladite au moins une ouverture traversante primaire 6. De plus, un tel moyen de maintien primaire 6 est distinct de la première peau 2 du mur 1, plus particulièrement de la plaque plane que comporte cette première peau 2 du mur 1. En outre, c'est, plus particulièrement, ladite au moins une ouverture traversante primaire 20 qui reçoit, intérieurement, au moins une partie dudit au moins un moyen de maintien primaire 6.

Un premier type de réalisation d'un tel mur 1 correspond, plus particulièrement, à un mur qui est configuré pour être utilisé dans le cadre de la construction d'un immeuble, notamment d'un immeuble d'habitation ou un garage.

Un tel mur 1 peut, alors, être de type porteur ou non.

Sur les figures en annexe, il a été illustré un tel mur 1 qui est, de préférence, un mur porteur.

Dans un tel mur 1, la première peau 2 est destinée à être orientée dans une première direction qui correspond à l'extérieur de l'immeuble tandis que la seconde peau 3 est destinée à être orientée dans une seconde direction qui correspond à l'intérieur de l'immeuble.

Un tel mur 1 peut, alors, comporter au moins un élément intermédiaire 7, qui est interposé entre la première peau 2 et la seconde peau 3, qui est parallèle à la première peau 2 ainsi qu'à la seconde peau 3, et qui est positionné à une distance déterminée de la première peau 2 en sorte de définir une première partie 40 dudit volume interne 4 qui comporte intérieurement le substrat de culture S.

Ledit au moins un élément intermédiaire 7 est traversé par lesdits moyens de raccordement 5.

Selon une autre caractéristique, un tel élément intermédiaire 7 comporte au moins une plaque isolante thermique 70.

De manière alternative ou (et de préférence) additionnelle, un tel élément intermédiaire 7 comporte au moins un moyen d'étanchéité ou de drainage 71.

Un tel moyen d'étanchéité ou de drainage 71 peut être constitué par une membrane, un film, une feuille ou une plaque.

Lorsque ledit au moins un élément intermédiaire 7 comporte une plaque isolante thermique 70, un tel moyen d'étanchéité ou de drainage 71 est positionné entre cette plaque isolante thermique 70 et la première peau 2, voire est rapporté sur ladite au moins une plaque isolante thermique 70.

Un tel moyen d'étanchéité ou de drainage 71 est maintenu en position par rapport à une telle plaque isolante thermique 70 (notamment en applique contre une telle plaque isolante thermique 70), ceci par l'intermédiaire de collerettes qui équipent les moyens de raccordement 5, par collage ou par agrafage sur cette plaque isolante thermique 70.

Encore une autre caractéristique concerne le fait que ledit au moins un élément intermédiaire 7 comporte au moins un moyen de rigidification 72 qui est configuré pour rigidifier ledit au moins un élément intermédiaire 7.

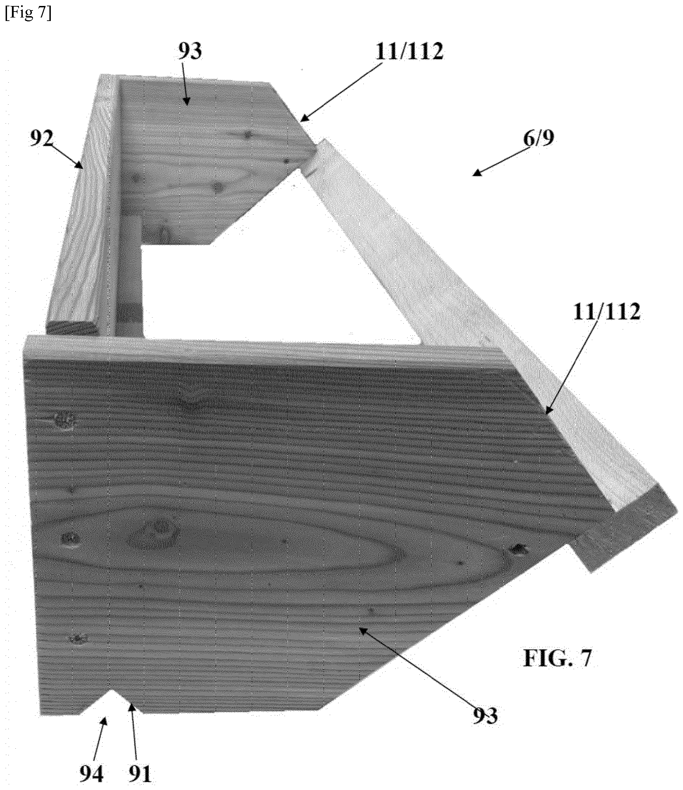

Tel que visible sur la figure 7, ledit au moins un élément intermédiaire 7 comporte des rainures 73 dont au moins une partie comporte, intérieurement, au moins un tel moyen de rigidification 72.

A ce propos, on observera que c'est, plus particulièrement, la plaque isolante thermique 70 qui comporte de telles rainures 73. Ces rainures 73 débouchent au niveau de la face de la plaque isolante thermique 70 qui est orientée en direction de la seconde peau 3 du mur 1 ou (et de préférence) qui est orientée en direction de la première peau 2 du mur 1. De préférence, ces rainures 73 s'étendent de manière verticale et/ou adoptent une section en queue d'aronde.

En ce qui concerne ledit au moins un moyen de rigidification 72, celui-ci peut comporter une plaque, une poutrelle ou une poutre, notamment réalisée en un mélange hydraulique, plus particulièrement en béton.

En fait, un tel mélange hydraulique est coulé à l'intérieur d'une rainure 73 telle que décrite ci-dessus et, après durcissement, définit ledit au moins un moyen de rigidification 72.

Selon une autre caractéristique visible figure 7, les moyens de raccordement 5 peuvent traverser ledit au moins un moyen de rigidification 72 ainsi que ledit au moins un élément intermédiaire 7. Cette caractéristique permet, avantageusement, d'immobiliser ledit au moins un moyen de rigidification 72 par rapport aux moyens de raccordement 5 et, donc, d'immobiliser ledit au moins un élément intermédiaire 7 par rapport à de tels moyens de raccordement 5 et, du fait de l'ancrage de ces moyens de raccordement 5 à l'intérieur de la première peau 2 et de la seconde peau 3, d'immobiliser ledit au moins un élément intermédiaire 7 par rapport à la première peau 2 ainsi que par rapport à la seconde peau 3.

Encore une autre caractéristique concerne le fait que ledit au moins un élément intermédiaire 7 est positionné à une distance déterminée de la seconde peau 3, ceci en sorte de définir (entre ledit au moins un élément intermédiaire 7 et la seconde peau 3) une seconde partie 41 dudit volume interne 4 destinée à être remplie par un mélange hydraulique ou remplie avec un tel mélange hydraulique, notamment du béton.

Un second type de réalisation du mur 1 conforme à l'invention correspond, plus particulièrement, à un mur qui est configuré pour être utilisé dans la cadre de la réalisation d'un ouvrage décoratif ou d'un ouvrage de lutte contre le bruit et/ou contre la pollution.

Selon un premier mode de réalisation de ce second type de réalisation, un tel mur 1 comporte ladite première peau 2, ladite au moins une ouverture traversante primaire 20, ladite seconde peau 3, ledit volume interne 4, lesdits moyens de raccordement 5, ledit substrat de culture S (au moins à l'intérieur d'au moins une partie dudit volume interne 4) ainsi que ledit au moins un moyen de maintien primaire 6, qui présentent les caractéristiques décrites ci-dessus.

Selon un second mode de réalisation de ce second type de réalisation, ce mur 1 peut comporter, en plus des caractéristiques du premier mode de réalisation, au moins une ouverture traversante secondaire, voire (et de préférence) une pluralité d'ouvertures traversantes secondaires, que comporte la seconde peau 3 de ce mur 1.

Là encore, une telle ouverture traversante secondaire est délimitée par une bordure inférieure, par une bordure supérieure et par des bordures latérales que comporte la seconde peau 3. A ce propos, on observera que c'est, plus particulièrement, ladite au moins une plaque plane, que comporte la seconde peau 3, qui comporte ladite au moins une ouverture traversante secondaire qui traverse, alors, ladite au moins une plaque plane.

Ce mur 1 comporte, également, au moins un moyen de maintien secondaire, qui complète ladite au moins une ouverture traversante secondaire, et qui est configuré pour maintenir le substrat de culture S au moins à l'intérieur de ladite au moins une partie dudit volume interne 4. Là encore, un tel moyen de maintien secondaire est distinct de la seconde peau 3 du mur 1, plus particulièrement de la plaque plane que comporte cette seconde peau 3 du mur 1. En outre, c'est, plus particulièrement, ladite au moins une ouverture traversante secondaire qui reçoit, intérieurement, au moins une partie dudit au moins un moyen de maintien secondaire.

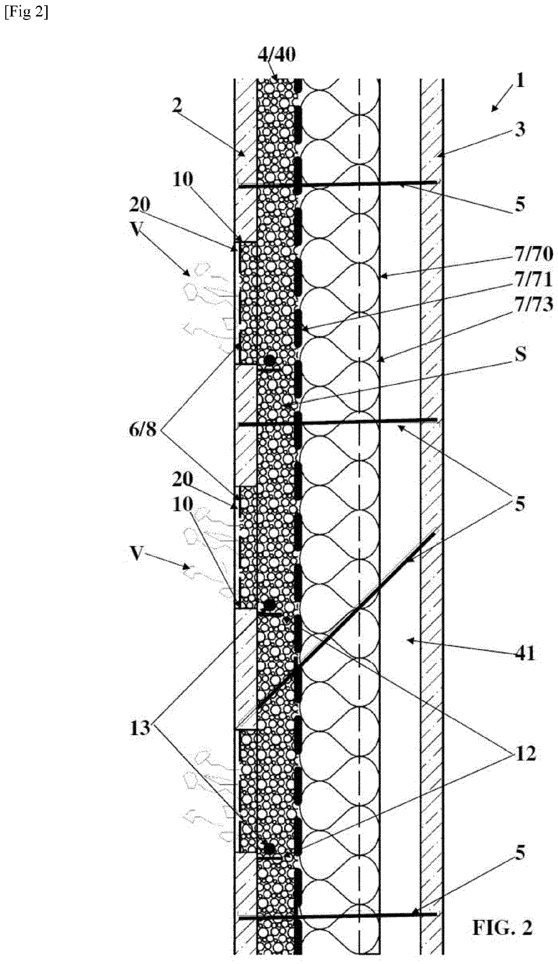

En ce qui concerne ledit au moins un moyen de maintien primaire 6, selon un premier mode de réalisation notamment illustré figure 2, ledit au moins un moyen de maintien primaire 6 comporte au moins un élément ajouré 8 qui s'étend à l'intérieur de ladite au moins une ouverture traversante primaire 20 et/ou au travers de ladite au moins une ouverture traversante primaire 20.

De manière additionnelle, ledit au moins un moyen de maintien secondaire comporte, lui aussi, au moins un élément ajouré qui s'étend à l'intérieur de ladite au moins une ouverture traversante secondaire et/ou au travers de ladite au moins une ouverture traversante secondaire.

Un tel élément ajouré 8 peut adopter la forme d'une grille ou d'une plaque pourvue de trous traversants.

C'est, plus particulièrement, à travers un tel élément ajouré 8 que s'étend une végétation V qui a été semée ou plantée à l'intérieur du substrat de culture S, ceci tel que visible figure 2. Cette végétation V s'étend, alors, selon le cas, à l'avant de la première peau 2 ou à l'avant de la seconde peau 3.

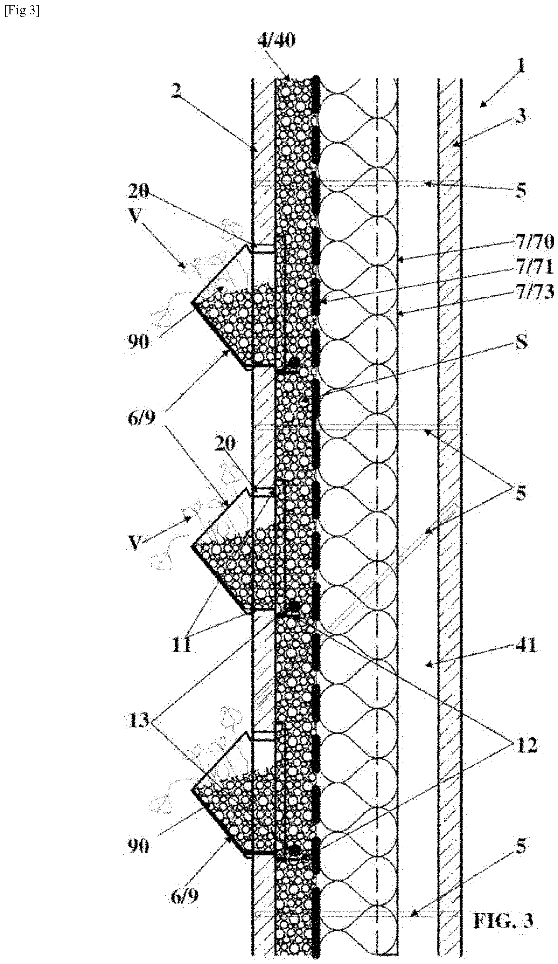

Selon un deuxième mode de réalisation notamment illustré figures 3 à 8, ledit au moins un moyen de maintien primaire 6 comporte au moins un bac 9 qui comporte, d'une part, au moins une partie externe 90 qui s'étend ou qui est destinée à s'étendre à partir de ladite première peau 2 (plus particulièrement à partir de la plaque plane que comporte cette première peau 2) et dans la première direction et, d'autre part, une partie interne qui s'étend à l'intérieur de ladite au moins une ouverture traversante primaire 20.

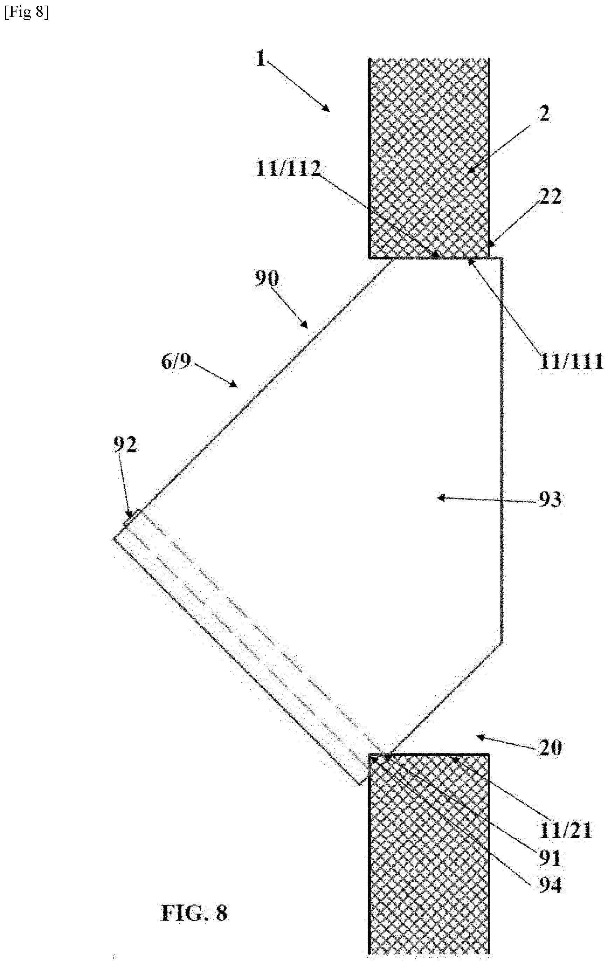

Tel que visible sur les figures 3 et 8 en annexe, ladite au moins une partie externe 90 d'un tel bac 9 s'étend à l'avant de la première peau 2 (plus particulièrement à l'avant de la plaque plane que comporte cette première peau 2), de manière latérale et/ou saillante par rapport au plan selon lequel s'étend cette première peau 2.

Ladite au moins une partie externe 90 d'un tel bac 9 comporte du substrat de culture S à l'intérieur duquel est semée ou plantée la végétation V qui s'étend, alors, à l'avant de la première peau 2 comme visible figure 3.

De manière additionnelle, ledit au moins un moyen de maintien secondaire comporte, lui aussi, au moins un bac qui comporte, d'une part, au moins une partie externe qui s'étend ou qui est destinée à s'étendre à partir de ladite seconde peau 3 (plus particulièrement à partir de la plaque plane que comporte cette seconde peau 3) et dans la seconde direction et, d'autre part, une partie interne qui s'étend à l'intérieur de ladite au moins une ouverture traversante secondaire.

Ladite au moins une partie externe d'un tel bac s'étend à l'avant de la seconde peau 3 (plus particulièrement à l'avant de la plaque plane que comporte cette seconde peau 3), de manière latérale et/ou saillante par rapport au plan selon lequel s'étend cette seconde peau 3.

Ladite au moins une partie externe d'un tel bac comporte du substrat de culture S à l'intérieur duquel est semée ou plantée la végétation V qui s'étend, alors, à l'avant de la seconde peau 3.

On observera que, par rapport à un élément ajouré 8, un tel bac 9 présente l'avantage d'offrir plus d'exposition à la lumière et, ainsi, une meilleure croissance de la végétation V.

Selon une autre caractéristique, ledit au moins un bac 9 peut être réalisé en un matériau synthétique, notamment polymère (par exemple en ABS ou PMA), plus particulièrement par moulage, injection ou thermoformage. De manière alternative, un tel bac 9 peut être réalisé en bois, notamment par assemblage d'éléments (notamment des plaques ou des planches) en bois. Cependant et selon un mode de réalisation préféré ledit au moins un bac 9 est réalisée en un matériau métallique et/ou est constitué par une tôle (par exemple en acier, notamment inoxydable, ou en fer notamment zingué, plus particulièrement électrozingué, voire laquée) pliée, voire encore soudée.

Un tel bac 9 comporte un fond 91 ainsi qu'une paroi avant 92 et des parois latérales 93, voire une paroi arrière, ces parois (92, 93) s'étendant à partir de ce fond 91.

Une autre caractéristique concerne le fait que le mur 1 comporte des moyens de solidarisation 10 qui sont configurés pour solidariser ledit au moins un moyen de maintien primaire 6 et ladite première peau 2.

De manière additionnelle, le mur 1 peut, également, comporter des moyens de solidarisation qui sont configurés pour solidariser ledit au moins un moyen de maintien secondaire et ladite seconde peau 3.

Aussi et lorsque ledit au moins un moyen de maintien primaire 6 (respectivement ledit au moins un moyen de maintien secondaire) comporte au moins un élément ajouré 8, de tels moyens de solidarisation 10 peuvent être constitués par un noyage d'une partie d'un tel élément ajouré 8 (plus particulièrement d'une bordure périphérique que comporte un tel élément ajouré 8) à l'intérieur de la première peau 2 (respectivement à l'intérieur de la seconde peau 3), plus particulièrement à l'intérieur du béton de cette première peau 2 (respectivement de cette seconde peau 3).

Lorsque ledit au moins un moyen de maintien primaire 6 (respectivement ledit au moins un moyen de maintien secondaire) comporte au moins un élément ajouré 8 ou au moins un bac 9, de tels moyens de solidarisation 10 peuvent être constitués par des moyens de fixation (notamment sous la forme d'au moins vis, d'au moins une cheville, d'au moins un goujon ou analogue) d'un tel élément ajouré 9 ou d'un tel bac 9 sur ladite première peau 2 (respectivement sur ladite seconde peau 3).

De manière alternative aux moyens de solidarisation 10, ledit mur 1 peut comporter des moyens de montage 11 qui sont configurés pour monter ledit au moins un bac 9, selon le cas, sur la première peau 2 ou sur la seconde peau 3.

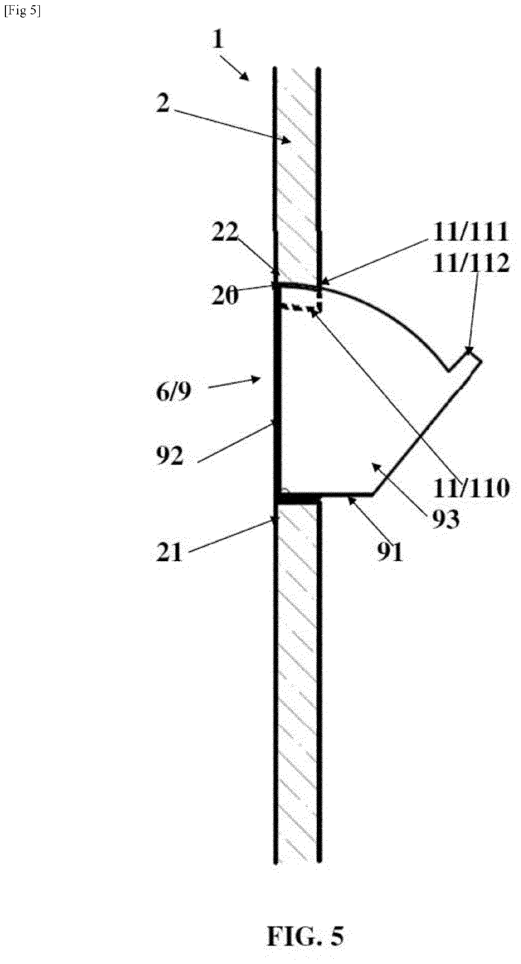

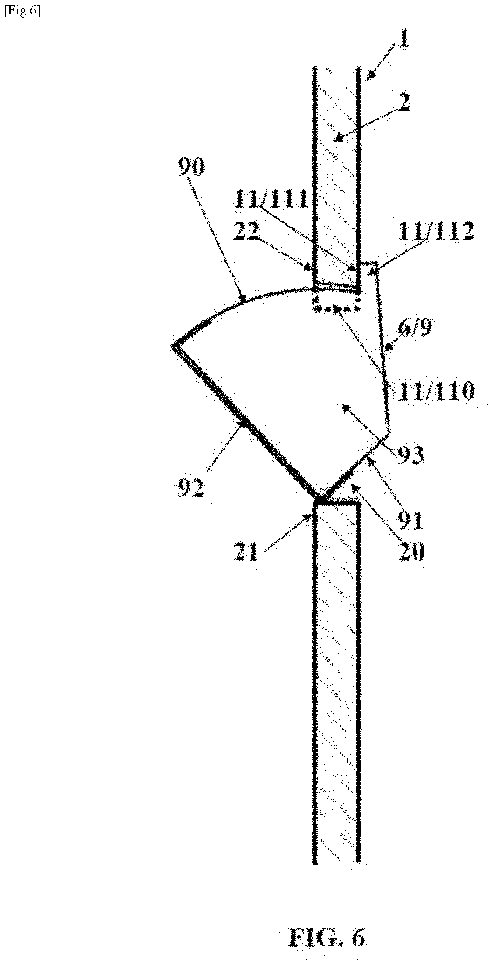

En fait et selon une première variante, de tels moyens de montage 11 peuvent être configurés pour monter ledit au moins un bac 9 de manière mobile par rapport à la première peau 2, ceci entre une position rabattue par rapport à cette première peau 2 (figure 5) et une position déployée par rapport à cette première peau 2 (figure 6).

De manière additionnelle, de tels moyens de montage peuvent, également, être configurés pour monter ledit au moins un bac de manière mobile par rapport à la seconde peau 3, ceci entre une position rabattue par rapport à cette seconde peau 3 et une position déployée par rapport à cette seconde peau 3.

A ce propos, on observera que, dans la position rabattue d'un tel bac 9 (figure 5), un tel bac 9 peut, avantageusement, constituer un élément de coffrage qui est configuré pour définir ladite au moins une ouverture traversante primaire 6 de la première peau 2 (respectivement pour définir ladite au moins une ouverture traversante secondaire de la seconde peau 3), ceci dans le cadre d'un processus de fabrication du mur 1 en usine décrit ci-dessous.

Dans la position déployée d'un tel bac 9 (figure 6), au moins une partie d'un tel bac 9 (plus particulièrement la partie externe 90 susmentionnée d'un tel bac 9) s'étend à partir de ladite première peau 2, dans une direction opposée à celle de la seconde peau 3, à l'avant de la première peau 2, de manière latérale et/ou saillante par rapport au plan selon lequel s'étend cette première peau 2.

De manière additionnelle, dans la position déployée d'un tel bac associé à la seconde peau 3, au moins une partie d'un tel bac (plus particulièrement la partie externe susmentionnée d'un tel bac) s'étend à partir de ladite seconde peau 3, dans une direction opposée à celle de la première peau 2, à l'avant de la seconde peau 3, de manière latérale et/ou saillante par rapport au plan selon lequel s'étend cette seconde peau 3.

Selon une autre caractéristique, les moyens de montage 11 peuvent comporter au moins un moyen de guidage 110, qui équipe la première peau 2 (respectivement qui équipe la seconde peau 3), et qui est configuré pour guider ledit au moins un bac 9 lors de son déplacement entre la position rabattue (figure 5) et la position déployée (figure 6).

Un tel moyen de guidage 110 peut être constitué par un rail de guidage qui équipe la première peau 2, respectivement la seconde peau 3, (plus particulièrement la bordure supérieure 22 que comporte cette première peau 2, respectivement que comporte cette seconde peau 3) et qui est configuré pour guider l'une des parois latérales 93 dudit bac 9.

Selon une deuxième variante illustrée figures 7 et 8, les moyens de montage 11 peuvent être configurés pour monter ledit au moins un bac 9 de manière amovible par rapport à la première peau 2 (respectivement par rapport à la seconde peau 3). Cette variante permet, avantageusement, la mise en place d'un tel bac 9 au sein du mur 1 (plus particulièrement le montage d'un tel bac 9 sur la première peau 2, respectivement sur la seconde peau 3, de ce mur 1), ceci sur un chantier et après la fabrication d'une partie de ce mur 1 en usine. Cette variante permet, également et de manière avantageuse, un retrait (notamment en cas de dégradation ou de détérioration) ainsi qu'un remplacement dudit au moins un bac 9.

Encore une autre caractéristique concerne le fait que les moyens de montage 11 peuvent comporter, d'une part, la bordure inférieure 21 (que comporte ladite première peau 2 et qui délimite ladite au moins une ouverture traversante primaire 20) ainsi que le fond 91 et/ou la paroi avant 92 et/ou les parois latérales 93 (que comporte ledit au moins un bac 9 et qui repose-nt sur ladite bordure inférieure 21) et, d'autre part, au moins un moyen de blocage 111 que comporte ou qui équipe (plus particulièrement intérieurement) la première peau 2 (plus particulièrement que comporte la bordure supérieure 22 que comporte ladite première peau 2 et qui délimite ladite au moins une ouverture traversante primaire 20) ainsi qu'au moins un moyen de blocage complémentaire 112, que comporte ledit au moins un bac 9 (plus particulièrement que comporte au moins une des parois latérales 93 d'un tel bac 9 ou une traverse qui raccorde les parois latérales 93), et qui coopère avec ledit au moins un moyen de blocage 111.

De manière additionnelle, les moyens de montage peuvent, encore, comporter, d'une part, la bordure inférieure (que comporte ladite seconde peau 3 et qui délimite ladite au moins une ouverture traversante secondaire) ainsi que le fond et/ou la paroi avant et/ou les parois latérales (que comporte ledit au moins un bac et qui repose-nt sur ladite bordure inférieure) et, d'autre part, au moins un moyen de blocage que comporte ou qui équipe (plus particulièrement intérieurement) la seconde peau 3 (plus particulièrement que comporte la bordure supérieure que comporte ladite seconde peau 3 et qui délimite ladite au moins une ouverture traversante secondaire) ainsi qu'au moins un moyen de blocage complémentaire, que comporte ledit au moins un bac (plus particulièrement que comporte au moins une des parois latérales d'un tel bac ou une traverse qui raccorde les parois latérales), et qui coopère avec ledit au moins un moyen de blocage.

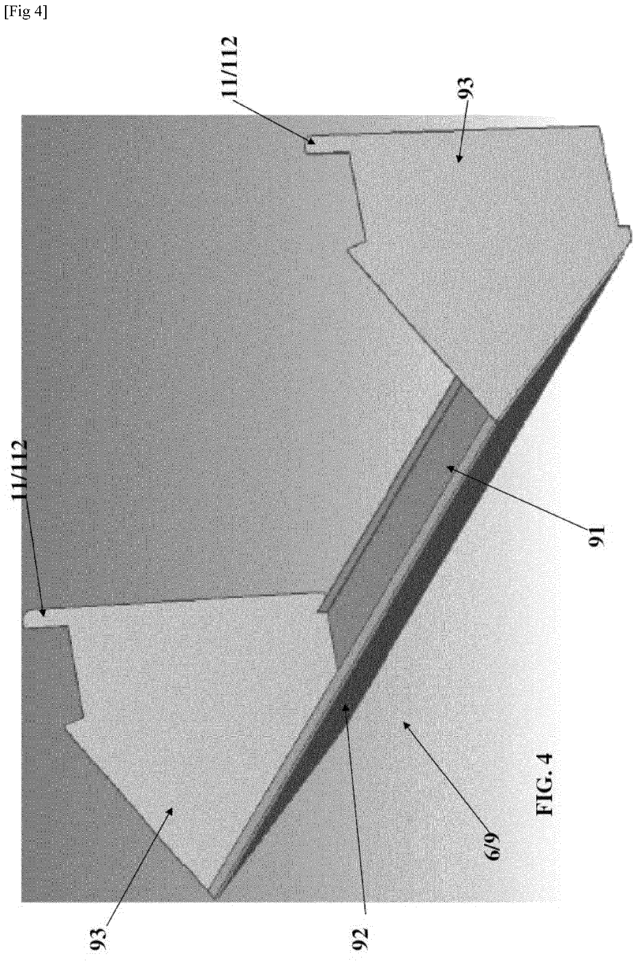

A ce propos, on observera que, selon un premier mode de réalisation correspondant, notamment, à la première variante (voire à la deuxième variante) des moyens de montage 11, ledit au moins un moyen de blocage 111 comporte au moins un moyen d'accrochage (plus particulièrement sous la forme d'un rebord d'accrochage que comporte la bordure supérieure 22 de la première peau 2 du mur 1, respectivement que comporte la bordure supérieure de la seconde peau 3 du mur 1) tandis que ledit au moins un moyen de blocage complémentaire 112 comporte au moins un moyen d'accrochage complémentaire, notamment sous la forme d'une découpe, d'un crochet, d'une patte, d'un doigt ou analogue que comporte au moins une des parois latérales 93 d'un tel bac 9 (ceci tel qu'illustré figures 4 à 6) ou sous la forme de la traverse qui raccorde les parois latérales 93 (tel qu'illustré figure 7).

Cependant et selon un deuxième mode de réalisation correspondant, notamment, à la deuxième variante des moyens de montage 11, ledit au moins un moyen de blocage 111 comporte au moins un moyen d'appui (plus particulièrement que comporte la bordure supérieure 22, notamment le rebord inférieur que comporte cette bordure supérieure 22, de la première peau 2, respectivement de la seconde peau 3, du mur 1) tandis que ledit au moins un moyen de blocage complémentaire 112 comporte au moins un moyen d'appui complémentaire (plus particulièrement que comporte au moins une des parois latérales 93 et/ou la traverse qui raccorde les parois latérales 93), comme illustré figures 7 et 8. Dans un tel mode de réalisation, le bac 9 (plus particulièrement le fond 91 de ce bac 9 et/ou la paroi avant 92 et/ou les parois latérales 93) peut comporter une encoche 94 (plus particulièrement sous la forme d'une découpe), qui présente une forme complémentaire à celle de la bordure inférieure 21, qui coopère avec cette bordure inférieure 21, et qui est localisée au moins à proximité de la paroi avant 92. On observera que le poids du substrat de culture S contenu dans la partie avant 90 d'un tel bac 9 a tendance à faire basculer ce bac 9 vers l'extérieur du mur 1 ce qui a pour effet que ledit au moins un moyen d'appui complémentaire du bac 9 prend fortement appui contre ledit au moins un moyen d'appui du mur 1 ce qui permet d'assurer le blocage de ce bac 9.

Encore une autre caractéristique concerne le fait que le mur 1 comporte, à l'intérieur de ladite au moins une partie du volume interne 4, au moins un moyen de retenue 12 qui est configuré pour retenir verticalement le substrat de culture S contenu dans ladite au moins une partie dudit volume interne 4.

Un tel moyen de retenue 12 comporte, d'une part, une partie interne qui est noyée à l'intérieur de la première peau 2 et, d'autre part, une partie externe, qui s'étend à l'intérieur du volume interne 4, à l'extérieur de la première peau 2 et en direction de la seconde interne 3. Au moins cette partie externe s'étend de manière sensiblement horizontale.

De manière additionnelle, un tel moyen de retenue peut comporter, d'une part, une partie interne qui est noyée à l'intérieur de la seconde peau 3 et, d'autre part, une partie externe, qui s'étend à l'intérieur du volume interne 4, à l'extérieur de la seconde peau 3 et en direction de la première interne 2. Au moins cette partie externe s'étend de manière sensiblement horizontale.

Un tel moyen de retenue 12 se situe de préférence en retrait par rapport à la seconde peau 3, respectivement par rapport à la première peau 2 (voire par rapport audit au moins un élément intermédiaire 7), ceci en sorte de définir un espace entre un tel moyen de retenue 12 et, selon le cas, la seconde peau 3, la première peau 2 et ledit au moins un élément intermédiaire 7.

Un tel moyen de retenue 12 peut adopter la forme d'une plaque ou d'une grille.

Selon une autre caractéristique, le mur 1 comporte, à l'intérieur de ladite au moins une partie dudit volume interne 4, au moins un moyen d'irrigation 13 du substrat de culture S.

Un tel moyen d'irrigation 13 peut comporter au moins un tuyau, notamment percé.

Un tel moyen d'irrigation 13 peut venir reposer sur ledit au moins un moyen de retenue 12, voire être rendu solidaire d'un tel moyen de retenue 12.

L'invention concerne, également, un procédé de fabrication d'un mur 1 qui présente au moins une partie des caractéristiques décrites ci-dessus. Un tel procédé de fabrication est, plus particulièrement, au moins en partie mis en oeuvre en usine de sorte que ce procédé de fabrication consiste en un procédé de fabrication d'un mur 1 au moins en partie préfabriqué.

Selon un premier mode de réalisation, ce procédé de fabrication comporte une étape qui consiste à positionner, à l'intérieur d'un moule, d'une part, au moins un moyen de coffrage qui est configuré pour définir au moins une partie de ladite au moins une ouverture traversante primaire 20 et, d'autre part, ledit au moins un moyen de maintien primaire 6.

A ce propos, on observera que, lorsqu'un tel moyen de maintien primaire 6 comporte au moins un bac 9 tel que décrit ci-dessus, ledit au moins un bac 9, d'une part, comporte au moins une partie (plus particulièrement le fond 91 et les parois latérales 93) qui constitue au moins une partie dudit au moins un moyen de coffrage et, d'autre part, est positionné à l'intérieur du moule, ceci en position rabattue.

Le procédé de fabrication comporte, ensuite, une étape qui consiste à couler, à l'intérieur du moule, un mélange hydraulique qui est destiné à constituer la première peau 2.

Ce procédé de fabrication comporte, alors, une étape qui consiste à positionner les moyens de raccordement 5, ceci à l'intérieur du moule et en sorte qu'une partie desdits moyens de raccordement 5 (plus particulièrement la première extrémité de ces moyens de raccordement 5) soit noyée à l'intérieur du mélange hydraulique.

Le procédé de fabrication comporte, alors, une étape de durcissement qui consiste à laisser ou à faire durcir (notamment par chauffage et/ou à l'intérieur d'une étuve) le mélange hydraulique contenu dans le moule, ceci pour l'obtention de la première peau 2.

Ce procédé de fabrication comporte, alors, une étape qui consiste à couler, dans un autre moule, un mélange hydraulique destiné à constituer la seconde peau 3.

Ce procédé de fabrication comporte, ensuite, une étape qui consiste, d'une part, à retourner un ensemble qui comporte au moins la première peau 2 et les moyens de raccordement 5 et, d'autre part, à noyer une autre partie des moyens de raccordement 5 (plus particulièrement la deuxième extrémité de ces moyens de raccordement 5) à l'intérieur du mélange hydraulique contenu dans cet autre moule.

Ce procédé de fabrication comporte, finalement, une étape de durcissement qui consiste à laisser ou à faire durcir (notamment par chauffage et/ou à l'intérieur d'une étuve) le mélange hydraulique contenu dans cet autre moule, ceci pour l'obtention de la seconde peau 3.

On observera que, avant de couler un mélange hydraulique dans cet autre moule, le procédé de fabrication peut encore comporter une étape qui consiste à positionner, à l'intérieur de cet autre moule, d'une part, au moins un moyen de coffrage qui est configuré pour définir au moins une partie de ladite au moins une ouverture traversante secondaire et, d'autre part, ledit au moins un moyen de maintien secondaire qui peut comporter au moins un bac qui est tel que décrit ci-dessus et qui, d'une part, comporte au moins une partie (plus particulièrement le fond et les parois latérales) qui constitue au moins une partie dudit au moins un moyen de coffrage et, d'autre part, est positionné à l'intérieur de cet autre moule, ceci en position rabattue.

Selon un deuxième mode de réalisation, ce procédé de fabrication comporte une étape qui consiste à couler, à l'intérieur d'un moule, un mélange hydraulique qui est destiné à constituer la seconde peau 3.

Ce procédé de fabrication comporte, alors, une étape qui consiste à positionner les moyens de raccordement 5, ceci à l'intérieur du moule et en sorte qu'une partie desdits moyens de raccordement 5 (plus particulièrement la deuxième extrémité de ces moyens de raccordement 5) soit noyée à l'intérieur du mélange hydraulique.

Ce procédé de fabrication comporte, ensuite, une étape de durcissement qui consiste à laisser ou à faire durcir (notamment par chauffage et/ou à l'intérieur d'une étuve) le mélange hydraulique contenu dans le moule, ceci pour l'obtention de la seconde peau 3.

Ce procédé de fabrication comporte, alors, une étape qui consiste à positionner, à l'intérieur d'un autre moule, d'une part, au moins un moyen de coffrage qui est configuré pour définir au moins une partie de ladite au moins une ouverture traversante primaire 20 et, d'autre part, ledit au moins un moyen de maintien primaire 6.

Lorsqu'un tel moyen de maintien primaire 6 comporte au moins un bac 9 tel que décrit ci-dessus, ledit au moins un bac 9, d'une part, comporte au moins une partie (plus particulièrement le fond 91 et les parois latérales 93) qui constitue au moins une partie dudit au moins un moyen de coffrage et, d'autre part, est positionné à l'intérieur de cet autre moule, ceci en position rabattue.

Ce procédé de fabrication comporte, après, une étape qui consiste à couler, dans cet autre moule, un mélange hydraulique qui est destiné à constituer la première peau 2.

Ce procédé de fabrication comporte, ensuite, une étape qui consiste, d'une part, à retourner un ensemble qui comporte au moins la seconde peau 3 et les moyens de raccordement 5 et, d'autre part, à noyer une autre partie des moyens de raccordement 5 (plus particulièrement la première extrémité de ces moyens de raccordement 5) à l'intérieur du mélange hydraulique contenu dans cet autre moule.

Finalement, le procédé de fabrication comporte une étape de durcissement qui consiste à laisser ou à faire durcir (notamment par chauffage et/ou à l'intérieur d'une étuve) le mélange hydraulique contenu dans cet autre moule, ceci pour l'obtention de la première peau 2.

A ce propos, on observera que le procédé de fabrication selon ce deuxième mode de réalisation, peut, encore, comporter, avant l'étape qui consiste à couler, à l'intérieur d'un moule, un mélange hydraulique qui est destiné à constituer la seconde peau 3, une étape qui consiste à positionner, à l'intérieur de ce moule, d'une part, au moins un moyen de coffrage qui est configuré pour définir au moins une partie de ladite au moins une ouverture traversante secondaire et, d'autre part, ledit au moins un moyen de maintien secondaire qui peut comporter au moins un bac qui est tel que décrit ci-dessus et qui, d'une part, comporte au moins une partie (plus particulièrement le fond et les parois latérales) qui constitue au moins une partie dudit au moins un moyen de coffrage et, d'autre part, est positionné à l'intérieur du moule, ceci en position rabattue.

Selon un troisième mode de réalisation, le procédé de fabrication comporte :
- une étape qui consiste à positionner, à l'intérieur d'un moule, au moins un moyen de coffrage qui est configuré pour définir au moins une partie de ladite au moins une ouverture traversante primaire 20 ;
- une étape qui consiste à couler, à l'intérieur du moule, un mélange hydraulique qui est destiné à constituer la première peau 2 ;
- une étape qui consiste à positionner les moyens de raccordement 5, ceci à l'intérieur du moule et en sorte qu'une partie desdits moyens de raccordement 5 soit noyée à l'intérieur du mélange hydraulique ;
- une étape de durcissement qui consiste à laisser ou à faire durcir le mélange hydraulique contenu dans le moule, ceci pour l'obtention de la première peau 2;
- une étape qui consiste à couler, dans un autre moule, un mélange hydraulique destiné à constituer la seconde peau 3 ;
- une étape qui consiste, d'une part, à retourner un ensemble qui comporte au moins la première peau 2 et les moyens de raccordement 5 et, d'autre part, à noyer une autre partie des moyens de raccordement 5 à l'intérieur du mélange hydraulique contenu dans cet autre moule ;
- une étape de durcissement qui consiste à faire ou à laisser durcir le mélange hydraulique contenu dans cet autre moule, ceci pour l'obtention de la seconde peau 3.

On observera que, avant de couler un mélange hydraulique dans cet autre moule, le procédé de fabrication peut encore comporter une étape qui consiste à positionner, à l'intérieur de cet autre moule, au moins un moyen de coffrage qui est configuré pour définir au moins une partie de ladite au moins une ouverture traversante secondaire.

Ce procédé de fabrication comporte, alors, une étape de montage qui consiste, sur un chantier, à monter ledit au moins un moyen de maintien primaire 6 (respectivement encore ledit au moins un moyen de maintien secondaire) qui comporte au moins un bac 9, ceci sur la première peau 2 (respectivement encore sur la seconde peau 3) et en sorte qu'une partie externe 90, que comporte ce bac 9, s'étend à partir de la première peau 2 (respectivement à partir de la seconde peau 3) et dans la première direction (respectivement dans la seconde direction).

En fait, ce procédé de fabrication consiste, plus particulièrement, à monter ledit au moins un moyen de maintien primaire 6 (respectivement ledit au moins un moyen de maintien secondaire) qui comporte au moins un bac 9 par l'intermédiaire des moyens de montage 11 décrits ci-dessus et conformes à la deuxième variante de réalisation.

Selon un quatrième mode de réalisation, le procédé de fabrication comporte :
- une étape qui consiste à couler, à l'intérieur d'un moule, un mélange hydraulique qui est destiné à constituer la seconde peau 3 ;
- une étape qui consiste à positionner les moyens de raccordement 5, ceci à l'intérieur du moule et en sorte qu'une partie desdits moyens de raccordement 5 soit noyée à l'intérieur du mélange hydraulique ;
- une étape de durcissement qui consiste à laisser ou à faire durcir le mélange hydraulique contenu dans le moule, ceci pour l'obtention de la seconde peau 3 ;
- une étape qui consiste à positionner, à l'intérieur d'un autre moule, au moins un moyen de coffrage qui est configuré pour définir au moins une partie de ladite au moins une ouverture traversante primaire 20 ;
- une étape qui consiste à couler, dans cet autre moule, un mélange hydraulique qui est destiné à constituer la première peau 2 ;
- une étape qui consiste, d'une part, à retourner un ensemble qui comporte au moins la seconde peau 3 et les moyens de raccordement 5 et, d'autre part, à noyer une autre partie des moyens de raccordement 5 à l'intérieur du mélange hydraulique contenu dans cet autre moule ;
- une étape de durcissement qui consiste à faire ou laisser durcir le mélange hydraulique contenu dans cet autre moule, ceci pour l'obtention de la première peau 2.

On observera que, avant l'étape qui consiste à couler, à l'intérieur du moule, un mélange hydraulique qui est destiné à constituer la seconde peau 3, le procédé de fabrication peut encore comporter une étape qui consiste à positionner, à l'intérieur de ce moule au moins un moyen de coffrage qui est configuré pour définir au moins une partie de ladite au moins une ouverture traversante secondaire.

Ce procédé de fabrication comporte, là encore, une étape de montage qui consiste, sur un chantier, à monter ledit au moins un moyen de maintien primaire 6 (respectivement encore ledit au moins un moyen de maintien secondaire) qui comporte au moins un bac 9, ceci sur la première peau 2 (respectivement encore sur la seconde peau 3) et en sorte qu'une partie externe 90, que comporte ce bac 9, s'étend à partir de la première peau 2 (respectivement à partir de la seconde peau 3) et dans la première direction (respectivement dans la seconde direction).

En fait, ce procédé de fabrication consiste, plus particulièrement, à monter ledit au moins un moyen de maintien primaire 6 (respectivement ledit au moins un moyen de maintien secondaire) qui comporte au moins un bac 9 par l'intermédiaire des moyens de montage 11 décrits ci-dessus et conformes à la deuxième variante de réalisation.

Quel que soit le mode de réalisation, le procédé de fabrication peut, encore comporter une étape qui consiste à constituer un ensemble qui comporte au moins un élément intermédiaire 7 (tel que décrit ci-dessus) ainsi que les moyens de raccordement 5 qui traversent ledit au moins un élément intermédiaire 7, ceci avant l'étape qui consiste à positionner ces moyens de raccordement 5 à l'intérieur du moule en sorte qu'une partie desdits moyens de raccordement 5 soit noyée à l'intérieur du mélange hydraulique.

Egalement quel que soit le mode de réalisation, le procédé de fabrication comporte une étape qui consiste, d'une part, à couler un mélange hydraulique à l'intérieur d'au moins une rainure 73 (telle que décrite ci-dessus), que comporte ledit au moins un élément intermédiaire 7 (décrit ci-dessus), et qui est traversée par au moins un desdits moyens de raccordement 5 et, d'autre part, à faire ou à laisser durcir le mélange hydraulique. Cette étape est réalisée, selon le cas, après ou (et de préférence) avant l'étape qui consiste à positionner ces moyens de raccordement 5 à l'intérieur d'un moule en sorte qu'une partie desdits moyens de raccordement 5 soit noyée à l'intérieur du mélange hydraulique.

Le mur 1 qui présente les caractéristiques décrites ci-dessus et/ou qui est obtenu par le procédé de fabrication décrit ci-dessus est implanté sur un chantier.

Sur ce chantier, lorsque ledit au moins un moyen de maintien primaire 6 (voire secondaire) comporte au moins un bac 9, soit on amène un tel bac 9 de la position rabattue vers la position déployée, soit on monte un tel bac 9 sur la première peau 2 (voire encore sur la seconde peau 3), voire on remplit un tel bac 9 déployé avec un substrat de culture S.

Sur ce chantier, on remplit au moins une partie (voire l'intégralité) dudit volume interne 4 du mur 1 avec un substrat de culture S.

A ce propos, on observera que, selon le type de réalisation, on remplit la première partie 40 dudit volume interne 4 (premier type de réalisation) ou l'intégralité de ce volume interne 4 (second type de réalisation).

Ce mur 1 comporte, alors, un substrat de culture S, ceci au moins à l'intérieur d'au moins une partie de ce volume interne 4.

Lorsque le volume interne 4 comporte une seconde partie 41, cette seconde partie 41 est remplie avec un mélange hydraulique (notamment du béton), ceci sur le chantier.

Le mur 1 comporte, alors, un mélange hydraulique (notamment du béton), ceci à l'intérieur de la seconde partie 41 du volume interne 4 du mur 1.

## Revendications

1. Mur à coffrage intégré végétalisé (1) comportant :
- une première peau (2), qui est destinée à être orientée dans une première direction, et qui comporte au moins une ouverture traversante primaire (20) ;
- une seconde peau (3), qui est destinée à être orientée dans une seconde direction opposée à la première direction, qui est parallèle à la première peau (2), et qui est positionnée à une distance déterminée de la première peau (2) en sorte de définir un volume interne (4) ;
- des moyens de raccordement (5) qui sont configurés pour raccorder la première peau (2) et la seconde peau (3) ;
- d'une part et au moins à l'intérieur d'au moins une partie dudit volume interne (4), un substrat de culture (S) et, d'autre part, au moins un moyen de maintien primaire (6), qui complète ladite au moins une ouverture traversante primaire (20), et qui est configuré pour maintenir le substrat de culture (S) au moins à l'intérieur de ladite au moins une partie dudit volume interne (4) ;
- **caractérisé par le fait que**, d'une part, ledit au moins un moyen de maintien primaire (6) comporte au moins un bac (9) qui comporte au moins une partie externe (90) qui s'étend ou qui est destinée à s'étendre à partir de ladite première peau (2) et dans la première direction et, d'autre part encore, il comporte des moyens de montage (11) qui sont configurés pour monter ledit au moins un bac (9) sur la première peau (2).

2. Mur à coffrage intégré végétalisé (1) selon la revendication 1, **caractérisé par le fait qu'**il comporte au moins un élément intermédiaire (7), qui est interposé entre la première peau (2) et la seconde peau (3), qui est parallèle à la première peau (2) ainsi qu'à la seconde peau (3), et qui est positionné à une distance déterminée de la première peau (2) en sorte de définir une première partie (40) dudit volume interne (4) qui comporte intérieurement le substrat de culture (S).

3. Mur à coffrage intégré végétalisé (1) selon la revendication 2, **caractérisé par le fait que** ledit au moins un élément intermédiaire (7) est positionné à une distance déterminée de la seconde peau (3), ceci en sorte de définir une seconde partie (41) dudit volume interne (4) destinée à être remplie par un mélange hydraulique ou remplie avec un tel mélange hydraulique.

4. Mur à coffrage intégré végétalisé (1) selon la revendication 1, **caractérisé par le fait que** la première peau (2) comporte au moins une plaque plane qui comporte ladite au moins une ouverture traversante primaire (20), qui traverse ladite au moins une plaque plane, et qui reçoit, intérieurement, au moins une partie dudit au moins un moyen de maintien primaire (6).

5. Mur à coffrage intégré végétalisé (1) selon la revendication 1, **caractérisé par le fait que** les moyens de montage (11) sont configurés pour monter ledit au moins un bac (9) de manière mobile par rapport à la première peau (2), ceci entre une position rabattue et une position déployée par rapport à cette première peau (2).

6. Mur à coffrage intégré végétalisé (1) selon la revendication 5, **caractérisé par le fait que** les moyens de montage (11) comportent au moins un moyen de guidage (110), qui équipe la première peau (2), et qui est configuré pour guider ledit au moins un bac (9) lors de son déplacement entre la position rabattue et la position déployée.

7. Mur à coffrage intégré végétalisé (1) selon la revendication 1, **caractérisé par le fait que** les moyens de montage (11) sont configurés pour monter ledit au moins un bac (9) de manière amovible par rapport à la première peau (2).

8. Mur à coffrage intégré végétalisé (1) selon l'une quelconque des revendications précédentes, **caractérisé par le fait que** les moyens de montage (11) comportent, d'une part, une bordure inférieure (21), que comporte ladite première peau (2) et qui délimite ladite au moins une ouverture traversante primaire (20), ainsi qu'un fond (91) et/ou une paroi avant (92) et/ou des parois latérales (93), que comporte ledit au moins un bac (9) et qui repose sur ladite bordure inférieure (21), et, d'autre part, au moins un moyen de blocage (111) que comporte ou qui équipe la première peau (2) ainsi qu'au moins un moyen de blocage complémentaire (112), que comporte ledit au moins un bac (9), et qui coopère avec ledit au moins un moyen de blocage (111).

9. Mur à coffrage intégré végétalisé (1) selon la revendication 8, **caractérisé par le fait que** ledit au moins un moyen de blocage (111) comporte au moins un moyen d'accrochage, respectivement au moins un moyen d'appui, tandis que ledit au moins un moyen de blocage complémentaire (112) comporte au moins un moyen d'accrochage complémentaire, respectivement au moins un moyen d'appui complémentaire.

10. Mur à coffrage intégré végétalisé (1) selon l'une quelconque des revendications précédentes, **caractérisé par le fait qu'**il comporte, à l'intérieur de ladite au moins une partie dudit volume interne (4), au moins un moyen d'irrigation (13) du substrat de culture (S).

11. Procédé de fabrication d'un mur à coffrage intégré végétalisé (1) selon l'une quelconque des revendications précédentes, ce procédé de fabrication comporte :
- une étape qui consiste à positionner, à l'intérieur d'un moule, d'une part, au moins un moyen de coffrage qui est configuré pour définir au moins une partie de ladite au moins une ouverture traversante primaire (20) et, d'autre part, ledit au moins un moyen de maintien primaire (6) qui comporte au moins un bac (9), d'une part, qui comporte au moins une partie qui constitue au moins une partie dudit au moins un moyen de coffrage et, d'autre part, qui est positionné à l'intérieur du moule, ceci en position rabattue ;
- une étape qui consiste à couler, à l'intérieur du moule, un mélange hydraulique qui est destiné à constituer la première peau (2) ;
- une étape qui consiste à positionner les moyens de raccordement (5), ceci à l'intérieur du moule et en sorte qu'une partie desdits moyens de raccordement (5) soit noyée à l'intérieur du mélange hydraulique ;
- une étape de durcissement qui consiste à laisser ou à faire durcir le mélange hydraulique contenu dans le moule, ceci pour l'obtention de la première peau (2) ;
- une étape qui consiste à couler, dans un autre moule, un mélange hydraulique destiné à constituer la seconde peau (3) ;
- une étape qui consiste, d'une part, à retourner un ensemble qui comporte au moins la première peau (2) et les moyens de raccordement (5) et, d'autre part, à noyer une autre partie des moyens de raccordement (5) à l'intérieur du mélange hydraulique contenu dans cet autre moule ;
- une étape de durcissement qui consiste à faire ou à laisser durcir le mélange hydraulique contenu dans cet autre moule, ceci pour l'obtention de la seconde peau (3).

12. Procédé de fabrication d'un mur à coffrage intégré végétalisé (1) selon l'une quelconque des revendications 1 à 10, ce procédé de fabrication comporte :
- une étape qui consiste à couler, à l'intérieur d'un moule, un mélange hydraulique qui est destiné à constituer la seconde peau (3) ;
- une étape qui consiste à positionner les moyens de raccordement (5), ceci à l'intérieur du moule et en sorte qu'une partie desdits moyens de raccordement (5) soit noyée à l'intérieur du mélange hydraulique ;
- une étape de durcissement qui consiste à laisser ou à faire durcir le mélange hydraulique contenu dans le moule, ceci pour l'obtention de la seconde peau (3) ;
- une étape qui consiste à positionner, à l'intérieur d'un autre moule, d'une part, au moins un moyen de coffrage qui est configuré pour définir au moins une partie de ladite au moins une ouverture traversante primaire (20) et, d'autre part, ledit au moins un moyen de maintien primaire (6) qui comporte au moins un bac (9), d'une part, qui comporte au moins une partie qui constitue au moins une partie dudit au moins un moyen de coffrage et, d'autre part, qui est positionné à l'intérieur de cet autre moule, ceci en position rabattue ;
- une étape qui consiste à couler, dans cet autre moule, un mélange hydraulique qui est destiné à constituer la première peau (2) ;
- une étape qui consiste, d'une part, à retourner un ensemble qui comporte au moins la seconde peau (3) et les moyens de raccordement (5) et, d'autre part, à noyer une autre partie des moyens de raccordement (5) à l'intérieur du mélange hydraulique contenu dans cet autre moule ;
- une étape de durcissement qui consiste à faire ou laisser durcir le mélange hydraulique contenu dans cet autre moule, ceci pour l'obtention de la première peau (2).

13. Procédé de fabrication d'un mur à coffrage intégré végétalisé (1) selon l'une quelconque des revendications 1 à 10, ce procédé de fabrication comporte :
- une étape qui consiste à positionner, à l'intérieur d'un moule, au moins un moyen de coffrage qui est configuré pour définir au moins une partie de ladite au moins une ouverture traversante primaire (20) ;
- une étape qui consiste à couler, à l'intérieur du moule, un mélange hydraulique qui est destiné à constituer la première peau (2) ;
- une étape qui consiste à positionner les moyens de raccordement (5), ceci à l'intérieur du moule et en sorte qu'une partie desdits moyens de raccordement (5) soit noyée à l'intérieur du mélange hydraulique ;
- une étape de durcissement qui consiste à laisser ou à faire durcir le mélange hydraulique contenu dans le moule, ceci pour l'obtention de la première peau (2) ;
- une étape qui consiste à couler, dans un autre moule, un mélange hydraulique destiné à constituer la seconde peau (3) ;
- une étape qui consiste, d'une part, à retourner un ensemble qui comporte au moins la première peau (2) et les moyens de raccordement (5) et, d'autre part, à noyer une autre partie des moyens de raccordement (5) à l'intérieur du mélange hydraulique contenu dans cet autre moule ;
- une étape de durcissement qui consiste à faire ou à laisser durcir le mélange hydraulique contenu dans cet autre moule, ceci pour l'obtention de la seconde peau (3) ;
- une étape de montage qui consiste, sur un chantier, à monter ledit au moins un moyen de maintien primaire (6) qui comporte au moins un bac (9), ceci sur la première peau (2) et en sorte qu'une partie externe (90), que comporte ce bac (9), s'étend à partir de la première peau (2) et dans la première direction.

14. Procédé de fabrication d'un mur à coffrage intégré végétalisé (1) selon l'une quelconque des revendications 1 à 10, ce procédé de fabrication comporte :
- une étape qui consiste à couler, à l'intérieur d'un moule, un mélange hydraulique qui est destiné à constituer la seconde peau (3) ;
- une étape qui consiste à positionner les moyens de raccordement (5), ceci à l'intérieur du moule et en sorte qu'une partie desdits moyens de raccordement (5) soit noyée à l'intérieur du mélange hydraulique ;
- une étape de durcissement qui consiste à laisser ou à faire durcir le mélange hydraulique contenu dans le moule, ceci pour l'obtention de la seconde peau (3) ;
- une étape qui consiste à positionner, à l'intérieur d'un autre moule, au moins un moyen de coffrage qui est configuré pour définir au moins une partie de ladite au moins une ouverture traversante primaire (20) ;
- une étape qui consiste à couler, dans cet autre moule, un mélange hydraulique qui est destiné à constituer la première peau (2) ;
- une étape qui consiste, d'une part, à retourner un ensemble qui comporte au moins la seconde peau (3) et les moyens de raccordement (5) et, d'autre part, à noyer une autre partie des moyens de raccordement (5) à l'intérieur du mélange hydraulique contenu dans cet autre moule ;
- une étape de durcissement qui consiste à faire ou laisser durcir le mélange hydraulique contenu dans cet autre moule, ceci pour l'obtention de la première peau (2) ;
- une étape de montage qui consiste, sur un chantier, à monter ledit au moins un moyen de maintien primaire (6) qui comporte au moins un bac (9), ceci sur la première peau (2) et en sorte qu'une partie externe (90), que comporte ce bac (9), s'étend à partir de la première peau (2) et dans la première direction.

15. Procédé de fabrication d'un mur à coffrage intégré végétalisé (1) selon l'une quelconque des revendications 11 à 14, **caractérisé par le fait qu'**il comporte une étape qui consiste à constituer un ensemble qui comporte au moins un élément intermédiaire (7) ainsi que les moyens de raccordement (5) qui traversent ledit au moins un élément intermédiaire (7), ceci avant l'étape qui consiste à positionner ces moyens de raccordement (5) à l'intérieur du moule en sorte qu'une partie desdits moyens de raccordement (5) soit noyée à l'intérieur du mélange hydraulique.

## Patentansprüche

1. Wand (1) mit begrünter integrierter Schalung, umfassend:
- eine erste Schicht (2), die dafür bestimmt ist, in einer ersten Richtung ausgerichtet zu sein, und die mindestens eine primäre Durchgangsöffnung (20) umfasst;
- eine zweite Schicht (3), die dafür bestimmt ist, in einer zweiten Richtung entgegengesetzt zu der ersten Richtung ausgerichtet zu sein, die parallel zu der ersten Schicht (2) ist, und die in einem festgelegten Abstand von der ersten Schicht (2) positioniert ist. um ein Innenvolumen (4) zu definieren;
- Verbindungsmittel (5), die konfiguriert sind, um die erste Schicht (2) und die zweite Schicht (3) zu verbinden;
- einerseits und mindestens innerhalb mindestens eines Teils des Innenvolumens (4) ein Kultursubstrat (S) und andererseits mindestens ein primäres Haltemittel (6), das die mindestens eine primäre Durchgangsöffnung (20) vervollständigt und das konfiguriert ist, um das Kultursubstrat (S) mindestens innerhalb des mindestens einen Teils des Innenvolumens (4) zu halten;
- **dadurch gekennzeichnet, dass** einerseits das mindestens eine primäre Haltemittel (6) mindestens einen Behälter (9) umfasst, der mindestens einen Außenteil (90) umfasst, der sich davon erstreckt oder dafür bestimmt ist, sich von der ersten Schicht (2) und in der ersten Richtung zu erstrecken, und außerdem andererseits Montagemittel (11), die konfiguriert sind, um den mindestens einen Behälter (9) an der ersten Schicht (2) zu montieren, umfasst.

2. Wand (1) mit begrünter integrierter Schalung nach Anspruch 1,
**dadurch gekennzeichnet, dass** sie mindestens ein Zwischenelement (7) umfasst, das zwischen der ersten Schicht (2) und der zweiten Schicht (3) eingefügt ist, das parallel zu der ersten Schicht (2) sowie zu der zweiten Schicht (3) ist und das in einem festgelegten Abstand von der ersten Schicht (2) positioniert ist, um einen ersten Teil (40) des Innenvolumens (4), das im Inneren das Kultursubstrat (S) umfasst, zu definieren.

3. Wand (1) mit begrünter integrierter Schalung nach Anspruch 2,
**dadurch gekennzeichnet, dass** das mindestens eine Zwischenelement (7) in einem festgelegten Abstand von der zweiten Schicht (3) positioniert ist, so dass ein zweiter Teil (41) des Innenvolumens (4) definiert wird, der dafür bestimmt ist, mit einem hydraulischen Gemisch gefüllt zu werden, oder mit einem solchen hydraulischen Gemisch gefüllt ist.

4. Wand (1) mit begrünter integrierter Schalung nach Anspruch 1,
**dadurch gekennzeichnet, dass** die erste Schicht (2) mindestens eine flache Platte umfasst, die die mindestens eine primäre Durchgangsöffnung (20) umfasst, die durch die mindestens eine flache Platte verläuft, und die im Inneren mindestens einen Teil des mindestens einen primären Haltemittels (6) aufnimmt.

5. Wand (1) mit begrünter integrierter Schalung nach Anspruch 1,
**dadurch gekennzeichnet, dass** die Montagemittel (11) konfiguriert sind, um den mindestens einen Behälter (9) relativ zu der ersten Schicht (2) bewegbar zu montieren, zwischen einer eingeklappten Position und einer ausgeklappten Position relativ zu dieser ersten Schicht (2).

6. Wand (1) mit begrünter integrierter Schalung nach Anspruch 5,
**dadurch gekennzeichnet, dass** die Montagemittel (11) mindestens ein Führungsmittel (110) umfassen, das die erste Schicht (2) einrichtet und das konfiguriert ist, um den mindestens einen Behälter (9) während seiner Bewegung zwischen der eingeklappten Position und der ausgeklappten Position zu führen.

7. Wand (1) mit begrünter integrierter Schalung nach Anspruch 1,
**dadurch gekennzeichnet, dass** die Montagemittel (11) konfiguriert sind, um den mindestens einen Behälter (9) abnehmbar relativ zu der ersten Schicht (2) zu montieren.

8. Wand (1) mit begrünter integrierter Schalung nach einem der vorstehenden Ansprüche, **dadurch gekennzeichnet, dass** die Montagemittel (11) einerseits einen unteren Rand (21), den die erste Schicht (2) umfasst, und der die mindestens eine primäre Durchgangsöffnung (20) begrenzt, sowie einen Boden (91) und/oder eine Vorderwand (92) und/oder Seitenwände (93), die der mindestens eine Behälter (9) umfasst und die auf dem unteren Rand (21) aufliegen, und andererseits mindestens ein Blockiermittel (111), das die erste Schicht (2) umfasst oder einrichtet, sowie mindestens ein komplementäres Blockiermittel (112), das der mindestens eine Behälter (9) umfasst und das mit dem mindestens einen Blockiermittel (111) zusammenwirkt, umfassen.

9. Wand (1) mit begrünter integrierter Schalung nach Anspruch 8,
**dadurch gekennzeichnet, dass** das mindestens eine Blockiermittel (111) mindestens ein Einhakmittel beziehungsweise mindestens ein Stützmittel umfasst, während das mindestens eine komplementäre Blockiermittel (112) mindestens ein komplementäres Einhakmittel beziehungsweise mindestens ein komplementäres Stützmittel umfasst.

10. Wand (1) mit begrünter integrierter Schalung nach einem der vorstehenden Ansprüche, **dadurch gekennzeichnet, dass** sie innerhalb des mindestens einen Teils des Innenvolumens (4) mindestens ein Mittel (13) zum Bewässern des Kultursubstrats (S) umfasst.

11. Verfahren zum Herstellen einer Wand (1) mit begrünter integrierter Schalung nach einem der vorstehenden Ansprüche, wobei dieses Herstellungsverfahren umfasst:
- einen Schritt, der darin besteht, innerhalb einer Form einerseits mindestens ein Schalungsmittel, das konfiguriert ist, um mindestens einen Teil der mindestens einen primären Durchgangsöffnung (20) zu definieren, und andererseits das mindestens eine primäre Haltemittel (6) zu positionieren, das mindestens einen Behälter (9) umfasst, der einerseits mindestens einen Teil umfasst, der mindestens einen Teil des mindestens einen Schalungsmittels bildet, und der andererseits innerhalb der Form positioniert ist, wobei dies die eingeklappte Position ist;
- einen Schritt, der darin besteht, in das Innere der Form ein hydraulisches Gemisch zu gießen, das dafür bestimmt ist, die erste Schicht (2) zu bilden;
- einen Schritt, der darin besteht, die Verbindungsmittel (5) zu positionieren, wobei dies innerhalb der Form erfolgt und so dass ein Teil der Verbindungsmittel (5) innerhalb des hydraulischen Gemischs eingebettet wird;
- einen Härtungsschritt, der darin besteht, das in der Form enthaltene hydraulische Gemisch härten zu lassen oder zu härten, wobei dies zum Erhalten der ersten Schicht (2) dient;
- einen Schritt, der darin besteht, in eine andere Form ein hydraulisches Gemisch zu gießen, das dafür bestimmt ist, die zweite Schicht (3) zu bilden;
- einen Schritt, der einerseits darin, eine Baugruppe umzudrehen, die mindestens die erste Schicht (2) und die Verbindungsmittel (5) umfasst, und andererseits darin besteht, einen weiteren Teil der Verbindungsmittel (5) innerhalb des hydraulischen Gemischs, das in dieser anderen Form enthalten ist, einzubetten;
- einen Härtungsschritt, der darin besteht, das in dieser anderen Form enthaltene hydraulische Gemisch zu härten oder härten zu lassen, wobei dies zum Erhalten der zweiten Schicht (3) dient.

12. Verfahren zum Herstellen einer Wand (1) mit begrünter integrierter Schalung nach einem der Ansprüche 1 bis 10, wobei dieses Herstellungsverfahren umfasst:
- einen Schritt, der darin besteht, in das Innere einer Form ein hydraulisches Gemisch zu gießen, das dafür bestimmt ist, die erste Schicht (3) zu bilden;
- einen Schritt, der darin besteht, die Verbindungsmittel (5) zu positionieren, wobei dies innerhalb der Form erfolgt und so dass ein Teil der Verbindungsmittel (5) innerhalb des hydraulischen Gemischs eingebettet wird;
- einen Härtungsschritt, der darin besteht, das in der Form enthaltene hydraulische Gemisch härten zu lassen oder zu härten, wobei dies zum Erhalten der zweiten Schicht (3) dient;
- einen Schritt, der darin besteht, innerhalb einer Form einerseits mindestens ein Schalungsmittel, das konfiguriert ist, um mindestens einen Teil der mindestens einen primären Durchgangsöffnung (20) zu definieren, und andererseits das mindestens eine primäre Haltemittel (6) zu positionieren, das mindestens einen Behälter (9) umfasst, der einerseits mindestens einen Teil umfasst, der mindestens einen Teil des mindestens einen Schalungsmittels bildet, und der andererseits innerhalb dieser anderen Form positioniert ist, wobei dies die eingeklappte Position ist;
- einen Schritt, der darin besteht, in diese andere Form ein hydraulisches Gemisch zu gießen, das dafür bestimmt ist, die erste Schicht (2) zu bilden;
- einen Schritt, der einerseits darin, eine Baugruppe umzudrehen, die mindestens die zweite Schicht (3) und die Verbindungsmittel (5) umfasst, und andererseits darin besteht, einen weiteren Teil der Verbindungsmittel (5) innerhalb des hydraulischen Gemischs, das in dieser anderen Form enthalten ist, einzubetten;
- einen Härtungsschritt, der darin besteht, das in dieser anderen Form enthaltene hydraulische Gemisch zu härten oder härten zu lassen, wobei dies zum Erhalten der ersten Schicht (2) dient.

13. Verfahren zum Herstellen einer Wand (1) mit begrünter integrierter Schalung nach einem der Ansprüche 1 bis 10, wobei dieses Herstellungsverfahren umfasst:
- einen Schritt, der darin besteht, innerhalb einer Form mindestens ein Schalungsmittel zu positionieren, das konfiguriert ist, um mindestens einen Teil der mindestens einen primären Durchgangsöffnung (20) zu definieren;
- einen Schritt, der darin besteht, in das Innere der Form ein hydraulisches Gemisch zu gießen, das dafür bestimmt ist, die erste Schicht (2) zu bilden;
- einen Schritt, der darin besteht, die Verbindungsmittel (5) zu positionieren, wobei dies innerhalb der Form erfolgt und so dass ein Teil der Verbindungsmittel (5) innerhalb des hydraulischen Gemischs eingebettet wird;
- einen Härtungsschritt, der darin besteht, das in der Form enthaltene hydraulische Gemisch härten zu lassen oder zu härten, wobei dies zum Erhalten der ersten Schicht (2) dient;
- einen Schritt, der darin besteht, in eine andere Form ein hydraulisches Gemisch zu gießen, das dafür bestimmt ist, die zweite Schicht (3) zu bilden;
- einen Schritt, der einerseits darin, eine Baugruppe umzudrehen, die mindestens die erste Schicht (2) und die Verbindungsmittel (5) umfasst, und andererseits darin besteht, einen weiteren Teil der Verbindungsmittel (5) innerhalb des hydraulischen Gemischs, das in dieser anderen Form enthalten ist, einzubetten;
- einen Härtungsschritt, der darin besteht, das in dieser anderen Form enthaltene hydraulische Gemisch zu härten oder härten zu lassen, wobei dies zum Erhalten der zweiten Schicht (3) dient;
- einen Montageschritt, der darin besteht, auf einer Baustelle das mindestens eine primäre Haltemittel (6), das mindestens einen Behälter (9) umfasst, wobei dies auf der ersten Schicht (2) ist, zu montieren und so dass ein Außenteil (90), den dieser Behälter (9) umfasst, sich von der ersten Schicht (2) und in der ersten Richtung erstreckt.

14. Verfahren zum Herstellen einer Wand (1) mit begrünter integrierter Schalung nach einem der Ansprüche 1 bis 10, wobei dieses Herstellungsverfahren umfasst:
- einen Schritt, der darin besteht, in das Innere einer Form ein hydraulisches Gemisch zu gießen, das dafür bestimmt ist, die erste Schicht (3) zu bilden;
- einen Schritt, der darin besteht, die Verbindungsmittel (5) zu positionieren, wobei dies innerhalb der Form erfolgt und so dass ein Teil der Verbindungsmittel (5) innerhalb des hydraulischen Gemischs eingebettet wird;
- einen Härtungsschritt, der darin besteht, das in der Form enthaltene hydraulische Gemisch härten zu lassen oder zu härten, wobei dies zum Erhalten der zweiten Schicht (3) dient;
- einen Schritt, der darin besteht, innerhalb einer anderen Form mindestens ein Schalungsmittel zu positionieren, das konfiguriert ist, um mindestens einen Teil der mindestens einen primären Durchgangsöffnung (20) zu definieren;
- einen Schritt, der darin besteht, in diese andere Form ein hydraulisches Gemisch zu gießen, das dafür bestimmt ist, die erste Schicht (2) zu bilden;
- einen Schritt, der einerseits darin, eine Baugruppe umzudrehen, die mindestens die zweite Schicht (3) und die Verbindungsmittel (5) umfasst, und andererseits darin besteht, einen weiteren Teil der Verbindungsmittel (5) innerhalb des hydraulischen Gemischs, das in dieser anderen Form enthalten ist, einzubetten;
- einen Härtungsschritt, der darin besteht, das in dieser anderen Form enthaltene hydraulische Gemisch zu härten oder härten zu lassen, wobei dies zum Erhalten der ersten Schicht (2) dient;
- einen Montageschritt, der darin besteht, auf einer Baustelle das mindestens eine primäre Haltemittel (6), das mindestens einen Behälter (9) umfasst, wobei dies auf der ersten Schicht (2) ist, zu montieren und so dass ein Außenteil (90), den dieser Behälter (9) umfasst, sich von der ersten Schicht (2) und in der ersten Richtung erstreckt.

15. Verfahren zum Herstellen einer Wand (1) mit begrünter integrierter Schalung nach einem der Ansprüche 11 bis 14, **dadurch gekennzeichnet, dass** es einen Schritt umfasst, der darin besteht, eine Baugruppe zu bilden, die mindestens ein Zwischenelement (7) sowie die Verbindungsmittel (5) umfasst, die durch das mindestens eine Zwischenelement (7) verlaufen, wobei dies vor dem Schritt, der darin besteht, diese Verbindungsmittel (5) innerhalb der Form zu positionieren, so dass ein Teil der Verbindungsmittel (5) innerhalb des hydraulischen Gemischs eingebettet wird.

## Claims

1. A vegetated integrated formwork wall (1) comprising:
- a first skin (2), which is intended to be oriented in a first direction, and which has at least one primary through-opening (20);
- a second skin (3), which is intended to be oriented in a second direction opposite to the first direction, which is parallel to the first skin (2), and which is positioned at a determined distance from the first skin (2) so as to define an internal volume (4);
- connecting means (5) configured to connect the first skin (2) and the second skin (3);
- on the one hand and at least inside at least part of said internal volume (4), a culture substrate (S) and, on the other hand, at least one primary holding means (6), which fills said at least one primary through opening (20), and which is configured to hold the culture substrate (S) at least inside said at least part of said internal volume (4);
- **characterized in that,** on the one hand, said at least one primary holding means (6) comprises at least one trough (9) which comprises at least one outer portion (90) which extends or is intended to extend from said first skin (2) and in the first direction and, on the other hand, it comprises mounting means (11) which are configured to mount said at least one trough (9) on the first skin (2).

2. The vegetated integrated formwork wall (1) according to claim 1, **characterized in that** it comprises at least one intermediate element (7), which is interposed between the first skin (2) and the second skin (3), which is parallel to the first skin (2) as well as to the second skin (3), and which is positioned at a determined distance from the first skin (2) so as to define a first portion (40) of said internal volume (4) which internally comprises the culture substrate (S).

3. The vegetated integrated formwork wall (1) according to claim 2, **characterized in that** said at least one intermediate element (7) is positioned at a determined distance from the second skin (3), so as to define a second portion (41) of said internal volume (4) intended to be filled with a hydraulic mixture or filled with such a hydraulic mixture.

4. The vegetated integrated formwork wall (1) according to claim 1, **characterized in that** the first skin (2) comprises at least one flat plate which comprises said at least one primary through-opening (20), which passes through said at least one flat plate, and which receives, internally, at least part of said at least one primary holding means (6).

5. The vegetated integrated formwork wall (1) according to claim 1, **characterized in that** the mounting means (11) are configured to mount said at least one trough (9) movably relative to the first skin (2), this between a folded position and a deployed position relative to this first skin (2).

6. The vegetated integrated formwork wall (1) according to claim 5, **characterized in that** the mounting means (11) comprise at least one guide means (110), which equips the first skin (2), and which is configured to guide said at least one trough (9) during its displacement between the folded-back position and the deployed position.

7. The vegetated integrated formwork wall (1) according to claim 1, **characterized in that** the mounting means (11) are configured to mount said at least one trough (9) removably with respect to the first skin (2).

8. The vegetated integrated formwork wall (1) according to any one of the preceding claims, **characterized in that** the mounting means (11) comprise, on the one hand, a lower edge (21), which comprises said first skin (2) and which delimits the said at least one primary through-opening (20), as well as a bottom (91) and/or a front wall (92) and/or side walls (93), which said at least one trough (9) comprises and which rests on the said bottom edge (21), and, on the other hand, at least one locking means (111) which the first skin (2) comprises or equips, as well as at least one complementary locking means (112), which said at least one trough (9) comprises and which cooperates with said at least one locking means (111).

9. The vegetated integrated formwork wall (1) according to claim 8, **characterized in that** said at least one locking means (111) comprises at least one hooking means, respectively at least one supporting means, while said at least one complementary locking means (112) comprises at least one complementary hooking means, respectively at least one complementary supporting means.

10. The vegetated integrated formwork wall (1) according to any one of the preceding claims, **characterized in that** it comprises, inside said at least one part of said internal volume (4), at least one irrigation means (13) for the culture substrate (S).

11. A method of manufacturing a vegetated integrated formwork wall (1) according to any one of the preceding claims, which manufacturing method comprises:
- a step that consists in positioning, inside a mold, on the one hand, at least one formwork means which is configured to define at least part of said at least one primary through opening (20) and, on the other hand, said at least one primary holding means (6) which comprises at least one trough (9), on the one hand, which comprises at least one part which constitutes at least part of said at least one formwork means and, on the other hand, which is positioned inside the mold, this in a folded position;
- a step that consists in casting into the mold a hydraulic mixture intended to form the first skin (2);
- a step that consists in positioning the connecting means (5) inside the mold, so that part of said connecting means (5) is embedded in the hydraulic mixture;
- a curing step, which consists in leaving or curing the hydraulic mixture contained in the mold, in order to obtain the first skin (2);
- a step that consists in casting, in another mold, a hydraulic mixture intended to form the second skin (3);
- a step that consists, on the one hand, in turning over an assembly which comprises at least the first skin (2) and the connecting means (5) and, on the other hand, in embedding another part of the connecting means (5) inside the hydraulic mixture contained in this other mold;
- a curing step that consists in curing or allowing to cure the hydraulic mixture contained in this other mold, in order to obtain the second skin (3).

12. The method of manufacturing a vegetated integrated formwork wall (1) according to any one of claims 1 to 10, which manufacturing method comprises:
- a step that consists in casting, inside a mold, a hydraulic mixture which is intended to form the second skin (3);
- a step that consists in positioning the connecting means (5) inside the mold, so that part of said connecting means (5) is embedded in the hydraulic mixture;
- a curing step, which consists in leaving or curing the hydraulic mixture contained in the mold, in order to obtain the second skin (3);
- a step that consists in positioning, inside another mold, on the one hand, at least one formwork means which is configured to define at least part of said at least one primary through opening (20) and, on the other hand, said at least one primary holding means (6) which comprises at least one trough (9), on the one hand, which comprises at least one part which constitutes at least part of said at least one formwork means and, on the other hand, which is positioned inside this other mold, this in a folded position;
- a step that consists in casting, in this other mold, a hydraulic mixture which is intended to form the first skin (2);
- a step that consists, on the one hand, in turning over an assembly which comprises at least the second skin (3) and the connecting means (5) and, on the other hand, in embedding another part of the connecting means (5) inside the hydraulic mixture contained in this other mold;
- a curing step that consists in curing or allowing to cure the hydraulic mixture contained in this other mold, in order to obtain the first skin (2).

13. The method of manufacturing a vegetated integrated formwork wall (1) according to any one of claims 1 to 10, which manufacturing method comprises:
- a step that consists in positioning, inside a mold, at least one formwork means which is configured to define at least part of said at least one primary through opening (20);
- a step that consists in casting into the mold a hydraulic mixture intended to form the first skin (2);
- a step that consists in positioning the connecting means (5) inside the mold, so that part of said connecting means (5) is embedded in the hydraulic mixture;
- a curing step, which consists in leaving or curing the hydraulic mixture contained in the mold, in order to obtain the first skin (2);
- a step that consists in casting, in another mold, a hydraulic mixture intended to form the second skin (3);
- a step that consists, on the one hand, in turning over an assembly which comprises at least the first skin (2) and the connecting means (5) and, on the other hand, in embedding another part of the connecting means (5) inside the hydraulic mixture contained in this other mold;
- a curing step that consists in curing or allowing to cure the hydraulic mixture contained in this other mold, in order to obtain the second skin (3);
- an assembly step that consists, on a building site, in mounting said at least one primary holding means (6) which comprises at least one trough (9), this on the first skin (2) and so that an external part (90), which this trough (9) comprises, extends from the first skin (2) and in the first direction.

14. The method of manufacturing a vegetated integrated formwork wall (1) according to any one of claims 1 to 10, which manufacturing method comprises:
- a step that consists in casting, inside a mold, a hydraulic mixture which is intended to form the second skin (3);
- a step that consists in positioning the connecting means (5) inside the mold, so that part of said connecting means (5) is embedded in the hydraulic mixture;
- a curing step, which consists in leaving or curing the hydraulic mixture contained in the mold, in order to obtain the second skin (3);
- a step that consists in positioning, inside another mold, at least one formwork means which is configured to define at least part of said at least one primary through opening (20);
- a step that consists in casting, in this other mold, a hydraulic mixture which is intended to form the first skin (2);
- a step that consists, on the one hand, in turning over an assembly which comprises at least the second skin (3) and the connecting means (5) and, on the other hand, in embedding another part of the connecting means (5) inside the hydraulic mixture contained in this other mold;
- a curing step that consists in curing or allowing to cure the hydraulic mixture contained in this other mold, in order to obtain the first skin (2);
- an assembly step that consists, on a building site, in mounting said at least one primary holding means (6) which comprises at least one trough (9), this on the first skin (2) and so that an external part (90), which this trough (9) comprises, extends from the first skin (2) and in the first direction.

15. The method of manufacturing a vegetated integrated formwork wall (1) according to any one of claims 11 to 14, **characterized in that** it comprises a step consisting in forming an assembly comprising at least one intermediate element (7) and connecting means (5) which pass through said at least one intermediate element (7), prior to the step consisting in positioning said connecting means (5) inside the mold so that part of said connecting means (5) is embedded in the hydraulic mixture.
